# EUROPEAN PATENT APPLICATION

(11) **EP 4 535 623 A1**
(43) Date of publication of application: **09.04.2025**
(21) Application number: 23811862.4
(22) Date of filing: 25.05.2023
(51) Int. Cl.: H02K 3/50

(54) **STATOR AND ROTATARY ELECTRICAL MACHINE**

(30) Priority: 25.05.2022 JP 2022085338
(71) Applicant: DENSO CORPORATION, Kariya-city, Aichi 448-8661 (JP)
(72) Inventor: SUZUKI, Takumi, Kariya- city, Aichi 4488661 (JP); TERADA, Kengo, Kariya- city, Aichi 4488661 (JP); HIRABAYASHI, Takashi, Kariya- city, Aichi 4488661 (JP)
(74) Representative: Kuhnen & Wacker Patent- und Rechtsanwaltsbüro PartG mbB
(86) International application number: PCT/JP2023/019419
(87) International publication number: WO 2023/228990

(57) **Abstract**

A stator (11) includes a stator core (20) having a tooth (23), a coil (40) wound around the tooth, a bus bar (71) electrically connected to the coil, a bus bar holder (60) that holds the bus bar, and a resin molded portion (50) that covers the coil, the bus bar holder, and the bus bar collectively. The bus bar holder has an interposed portion (61) disposed between the coil and the bus bar, and the thermal conductivity of the bus bar holder including the interposed portion is lower than the thermal conductivity of the resin molded portion.

## Description

### CROSS-REFERENCE TO RELATED APPLICATIONS

This application is based on Japanese Application No. 2022-085338 filed on May 25, 2022, the disclosure of which is incorporated herein by reference.

### TECHNICAL FIELD

The present disclosure relates to a stator and a rotating electric machine.

### BACKGROUND

For example, the stator described in Patent Document 1 includes a stator core having teeth, a coil wound around the teeth, and a bus bar electrically connected to the coil. The stator also includes a molded resin that collectively covers the coils and the bus bar.

### PRIOR ART DOCUMENT

### PATENT DOCUMENT

Patent Document 1: JP 2010- 268560A

### SUMMARY OF INVENTION

In the above-described stator, when the temperature of the molded resin rises due to heat generation from the bus bars, the temperature difference between the coil and the molded resin may become smaller. This slows down the heat transfer from the coil to the molded resin, which may result in a decrease in the heat dissipation performance of the coil.

An object of the present disclosure is to provide a stator and a rotating electric machine capable of suppressing a decrease in a heat dissipation performance of a coil. In a first aspect of the present disclosure, a stator includes a stator core having a tooth, a coil wound around the tooth, a bus bar electrically connected to the coil, a bus bar holder that holds the bus bar, and a resin molded portion that collectively covers the coil, the bus bar holder and the bus bar. The bus bar holder has an interposed portion disposed between the coil and the bus bar, and the thermal conductivity of the bus bar holder including the interposed portion is lower than the thermal conductivity of the resin molded portion.

In a second aspect of the present disclosure, a rotating electric machine includes a stator and a rotor facing the stator. The stator includes a stator core having a tooth, a coil wound around the tooth, a bus bar electrically connected to the coil, a bus bar holder that holds the bus bar, and a resin molded portion that collectively covers the coil, the bus bar holder and the bus bar. The bus bar holder has an interposed portion disposed between the coil and the bus bar, and the thermal conductivity of the bus bar holder including the interposed portion is lower than the thermal conductivity of the resin molded portion.

According to the above-described stator and rotating electric machine, the transfer of heat from the bus bar to the area around the coil in the resin molded portion can be suppressed by the interposed portion of the bus bar holder, which has a lower thermal conductivity. This makes it possible to suppress a rise in temperature in the area around the coil in the resin molded portion. Therefore, it is possible to suppress a decrease in the heat transfer performance from the coil to the resin molded portion due to a decrease in the temperature difference between the coil and the resin molded portion.

### BRIEF DESCRIPTION OF THE DRAWINGS

The above and other objects, features and advantages of the present disclosure will become more apparent from the following detailed description made with reference to the accompanying drawings. In the drawings,
FIG. 1 is a schematic diagram of a rotating electric machine according to an embodiment;
FIG. 2 is a perspective view showing a stator of the same embodiment, partially in section;
FIG. 3 is a schematic cross-sectional view of a stator of the same embodiment;
FIG. 4 is a schematic cross-sectional view of a stator according to a modified example; and
FIG. 5 is a schematic cross-sectional view of a stator according to a modified example.

### DETAILED DESCRIPTION

Hereinafter, an embodiment of a stator and a rotating electric machine will be described with reference to the drawings. In the drawings, a part of the configuration may be exaggerated or simplified for convenience of description. Furthermore, the dimensional ratios of each component may differ between the drawings.

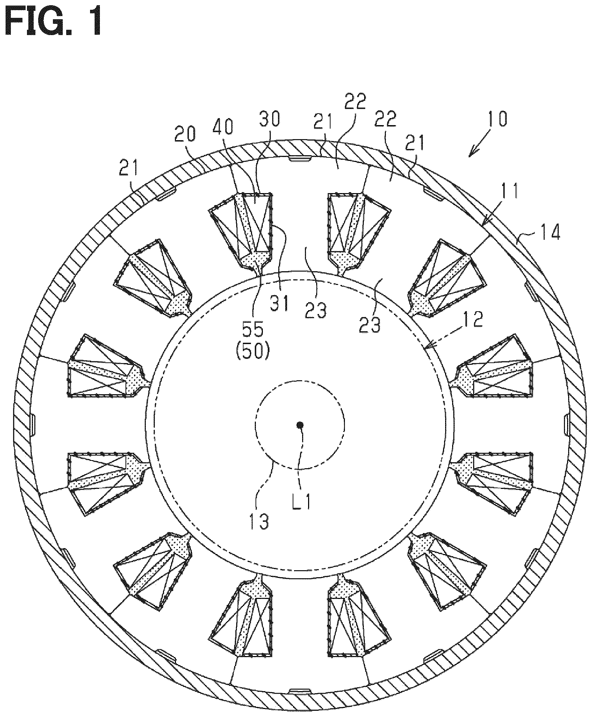

As shown in FIG. 1, a rotating electric machine 10 includes a stator 11 and a rotor 12 facing the stator 11. The stator 11 has an annular shape. The rotor 12 is disposed inside the stator 11. The rotor 12 has a rotating shaft 13. The rotor 12 faces the stator 11, for example, in a radial direction. The stator 11 is accommodated in a cylindrical housing 14. The stator 11 is accommodated in the housing 14 by, for example, shrink fitting.

### (Configuration of stator 11)

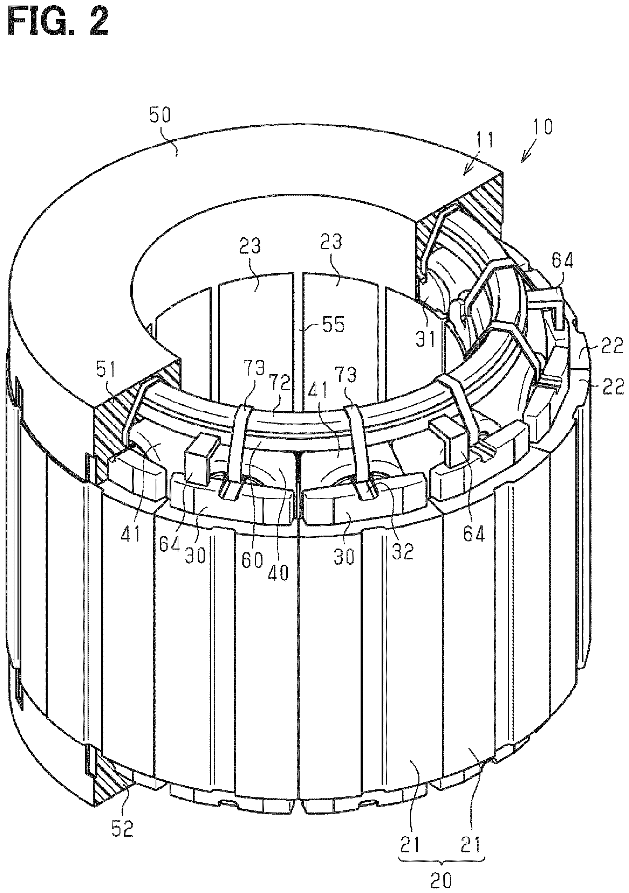

As shown in FIGS. 1 and 2, the stator 11 includes a stator core 20, a bobbin 30, a coil 40, a resin molded portion 50, and a bus bar holder 60. In addition, FIG. 2 shows a part of the resin molded portion 50 in cross section.

The stator core 20 has a plurality of split cores 21 arranged in an annular shape along a circumferential direction of the stator 11. The stator core 20 of the present embodiment has, for example, twelve split cores 21. Each split core 21 is made of, for example, a magnetic metal material. In the following description, a circumferential direction of the stator 11, a radial direction of the stator 11, and an axial direction of the stator 11 may be simply referred to as the "circumferential direction," the "radial direction," and the "axial direction," respectively.

Each split core 21 has a core back 22 and teeth 23 extending in the radial direction from the core back 22. The multiple split cores 21 are arranged in the circumferential direction such that the core backs 22 as a whole form an annular shape. Each of the teeth 23 extends in the radial direction.

In each split core 21, the teeth 23 protrude, for example, radially inward from an inner surface of the core back 22. The tips of the teeth 23 face an axis L1 of the stator 11. The base ends of the teeth 23 are the radially outer ends of the teeth 23.

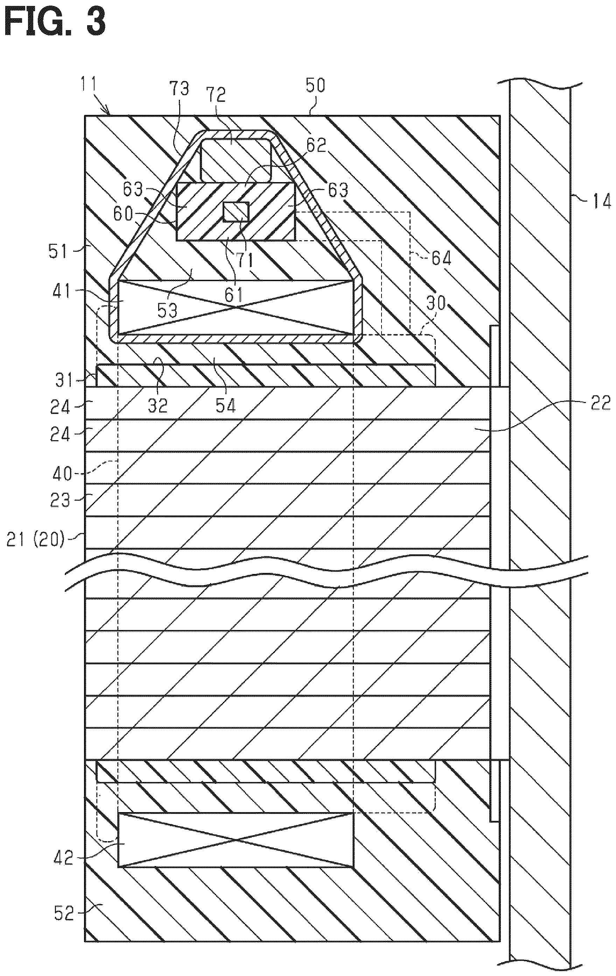

As shown in FIG. 3, each split core 21 is formed of a plurality of core sheets 24 stacked in the axial direction. Each core sheet 24 is made of, for example, an electromagnetic steel plate. The core sheets 24 are fixed to one another by, for example, adhesion, caulking, laser welding, or the like.

As shown in Figs. 1 and 2, in a state in which the split cores 21 are arranged in an annular shape in the circumferential direction, the core backs 22 of the split cores 21 are arranged in an annular shape along the circumferential direction. Each core back 22 is in contact with the adjacent core backs 22 on both sides in the circumferential direction. A radially outer surface of each core back 22 contacts an inner circumferential surface of the housing 14. The axial end surfaces of each core back 22 are located, for example, on the same plane perpendicular to the axis L1.

### (Configuration of bobbin 30)

Each split core 21 is provided with a bobbin 30. For example, a plurality of bobbins 30 are provided corresponding to the plurality of split cores 21, respectively. The bobbin 30 has a tooth covering portion 31 that covers the tooth 23. The coil 40 is wound around each tooth covering portion 31, for example, in a concentrated winding manner. That is, the tooth covering portion 31 of the bobbin 30 is interposed between the split core 21 and the coil 40. As a result, the bobbin 30 provides electrical insulation between the split core 21 and the coil 40. Each of the split core 21, the bobbin 30, and the coil 40 constitutes a single integrated part.

The bobbin 30 is made of an insulating material such as synthetic resin. The bobbin 30 may be made of a material such as epoxy resin. The bobbin 30 is, for example, molded to the split core 21. That is, it is formed integrally with the split core 21. This allows the bobbin 30 to be in close contact with the split core 21.

In addition, as a configuration different from that of the present embodiment, for example, when a bobbin manufactured separately from the split core 21 is later attached to the split core 21, there is a concern that a large gap may occur between the split core 21 and the bobbin. In this regard, by molding the bobbin 30 to the split core 21 as in the present embodiment, it is possible to eliminate the gap between the split core 21 and the bobbin 30 or to make the gap extremely small.

As shown in FIGS. 2 and 3, in the tooth covering portion 31, a groove portion 32 extending along the radial direction is formed in a portion that covers the axial end surface of the tooth 23. The groove portion 32 is formed, for example, in the circumferential center of the tooth covering portion 31. The groove portion 32 is formed, for example, from one end to the other end in the radial direction of the bobbin 30.

### (Configuration of coil 40)

The coil 40 is connected in three phases, namely, U-phase, V-phase and W-phase. When power is supplied to the coil 40, a rotating magnetic field for driving the rotor 12 to rotate is generated in the stator 11. The coil 40 is connected, for example, in a star connection having a neutral point. A bus bar 71 embedded inside the bus bar holder 60 is electrically connected to the coil 40 so as to function as, for example, a neutral terminal. The bus bar 71 has a circular ring shape or a circular arc shape extending in the circumferential direction.

The stator 11 also has a connecting portion 72 that electrically connects the coils 40 to each other. The connecting portion 72 is, for example, a crossover wire that is a conductor continuing from the coil 40, or a bus bar that is made of a conductor separate from the conductor that constitutes the coil 40. In the drawings, the region in which the multiple connecting portions 72 are arranged is illustrated as the connecting portion 72. As shown in FIG. 3, the coil 40 has a first coil end 41 which is one end of the coil 40 in the axial direction, and a second coil end 42 which is the other end of the coil 40 in the axial direction.

### (Configuration of bus bar holder 60)

As shown in FIG. 3, the bus bar holder 60 holds the bus bar 71. For example, the bus bar 71 is embedded inside the bus bar holder 60 by insert molding. The bus bar holder 60 is made of, for example, a synthetic resin. The bus bar holder 60 may be made of a material such as epoxy resin or unsaturated polyester resin.

The bus bar holder 60 has a first covering portion 61, a second covering portion 62, and a third covering portion 63 that cover the bus bar 71. The first covering portion 61 is interposed between the coil 40 and the bus bar 71 in the axial direction. The first covering portion 61 covers a side surface of the bus bar 71 that faces the coil 40 in the axial direction. In the bus bar holder 60, the first covering portion 61 is configured as an interposed portion disposed between the coil 40 and the bus bar 71. The second covering portion 62 covers the side of the bus bar 71 opposite to the first covering portion 61 in the axial direction. The third covering portions 63 cover both radial sides of the bus bar 71. That is, in a cross section along the radial direction, the entire periphery of the bus bar 71 is covered by the first covering portion 61, the second covering portion 62 and the third covering portion 63.

The bus bar holder 60 and the bus bar 71 are provided on the axial side of the coil 40. For example, the bus bar holder 60 and the bus bar 71 are provided near the first coil end 41 in the axial direction of the stator 11. The first covering portion 61 of the bus bar holder 60 is disposed between the coil 40 and the bus bar 71 in the axial direction. Further, the first covering portion 61 is spaced apart from the first coil end 41 in the axial direction.

The bus bar holder 60 has a spacing maintaining portion 64 that maintains the first coil end 41 and the first covering portion 61 in a spaced apart state. The spacing maintaining portion 64 extends from, for example, the first covering portion 61 or the third covering portion 63. The spacing maintaining portions 64 are provided in plurality at equal intervals in the circumferential direction, for example. A tip of each spacing maintaining portion 64 abuts against, for example, the bobbin 30 in the axial direction. This maintains the distance between the first covering portion 61 of the bus bar holder 60 and the first coil end 41.

The connecting portion 72 is disposed on the opposite side of the bus bar holder 60 with respect to the first coil end 41 in the axial direction. That is, the bus bar holder 60 is located between the connecting portion 72 and the first coil end 41 in the axial direction.

The stator 11 includes a fastening band 73 that fastens the connecting portion 72 and the bus bar holder 60 to the first coil end 41. A plurality of fastening bands 73 are provided. The number of fastening bands 73 is, for example, the same as the number of coils 40. The fastening band 73 is provided so as to collectively surround the connecting portion 72, the bus bar holder 60, and the first coil end 41 in a cross section taken along the radial direction. As a result, the bus bar holder 60 and the connecting portion 72 are fixed to the coil 40 with the spacing between the bus bar holder 60 and the first coil end 41 maintained by each spacing maintaining portion 64. For example, each fastening band 73 is passed through the groove portion 32 of the corresponding bobbin 30 and onto the inner periphery of the coil 40.

### (Configuration of resin molded portion 50)

As shown in FIGS. 2 and 3, the resin molded portion 50 collectively covers, for example, the multiple coils 40, the bus bar holder 60 including the bus bars 71, and the connecting portion 72. The resin molded portion 50 has a first molded part 51 that covers the first coil ends 41 and a second molded part 52 that covers the second coil ends 42. The first molded part 51 covers the first coil end 41, the bus bar holder 60 including the bus bar 71, the connecting portion 72, and each fastening band 73 collectively. The first molded part 51 covers both radial sides of the first coil end 41. Moreover, the first molded part 51 covers both radial sides of the bus bar holder 60. In addition, the first molded part 51 covers the axially outer side and both radial sides of the connecting portion 72. The second molded part 52 covers the axially outer side and both radially opposite sides of the second coil end 42.

As shown in FIG. 3, the first molded part 51 has an intermediate portion 53 that is inserted between the first coil end 41 and the first covering portion 61 of the bus bar holder 60. The intermediate portion 53 is in close contact with both the first coil end 41 and the first covering portion 61.

The first molded part 51 has a filling portion 54 that fits into the groove portion 32. The filling portion 54 is interposed between the first coil end 41 and the tooth covering portion 31 of the bobbin 30. The filling portion 54 is in close contact with the surface of the groove portion 32 and the inner circumferential surface of the first coil end 41.

The outer circumferential surfaces of the first molded part 51 and the second molded part 52 are spaced apart from the inner circumferential surface of the housing 14, for example. As a result, when the stator core 20 on which the resin molded portion 50 is formed is accommodated in the housing 14, it is possible to prevent the housing 14 from interfering with the first molded part 51 and the second molded part 52.

As shown in FIGS. 1 and 2, the resin molded portion 50 has a third molded part 55 that passes between the teeth 23 adjacent to each other in the circumferential direction and connects the first molded part 51 and the second molded part 52. The third molded part 55 is filled between each of the teeth 23. The first molded part 51 and the second molded part 52 are connected to each other by a plurality of third molded parts 55.

In the stator 11, for example, an integral part including the split core 21, the bobbin 30, and the coil 40 is arranged in an annular shape. Thereafter, the bus bar holder 60 including the bus bar 71 is disposed so as to face the first coil end 41. Then, each coil 40 is electrically connected to the bus bar 71. Thereafter, the bus bar holder 60 and the connecting portion 72 are fixed to the first coil end 41 by the fastening band 73. Finally, the resin molded portion 50 is molded so as to collectively cover each of the coils 40, each of the bobbins 30, the bus bar holder 60, and the connecting portion 72.

The resin molded portion 50 may be made of, for example, a material obtained by mixing alumina powder with epoxy resin or unsaturated polyester resin. The thermal conductivity of the resin molded portion 50 is set to, for example, 2.0 (W/m·K) or more.

The thermal conductivity of the bus bar holder 60 including the first covering portion 61 is set to be smaller than the thermal conductivity of the resin molded portion 50. In the present embodiment, the thermal conductivity of the bus bar holder 60 is set to less than 2.0 (W/m·K).

The thermal conductivity of the bobbin 30 is set to be smaller than the thermal conductivity of the resin molded portion 50. In the present embodiment, the thermal conductivity of the bobbin 30 is set to, for example, 1.0 (W/m·K) or less.

The operation of the present embodiment will be described. The rotor 12 rotates due to interaction with a rotating magnetic field generated in the stator 11 by energizing each coil 40. At this time, the coil 40 generates heat by energizing. A part of the heat of the coil 40 is dissipated to the outside via the resin molded portion 50. An example of the heat dissipation path is a heat dissipation path that transmits from the coil 40 through the resin molded portion 50 to the stator core 20. Furthermore, by forming the resin molded portion 50 from a material having a higher thermal conductivity than the bobbin 30, it is possible to further improve heat dissipation properties.

In addition, when electricity is applied to each coil 40, the bus bar 71 generates heat. A main portion of the bus bar 71 is embedded inside the bus bar holder 60. The bus bar holder 60 is set to have a smaller thermal conductivity than the resin molded portion 50. The heat transfer from the bus bar 71 to the resin molded portion 50 is slowed down by the bus bar holder 60.

The effects of the present embodiment will be described.
(1) The thermal conductivity of the bus bar holder 60 is smaller than the thermal conductivity of the resin molded portion 50. According to this configuration, the heat of the bus bar 71 can be prevented from being transmitted to the area around the coil of the resin molded portion 50 by the bus bar holder 60 having a lower thermal conductivity. This makes it possible to suppress a rise in temperature in the area around the coil in the resin molded portion 50. Therefore, it is possible to suppress a decrease in the heat transfer performance from the coil 40 to the resin molded portion 50 due to a decrease in the temperature difference between the coil 40 and the resin molded portion 50.
(2) The bus bar 71 is embedded inside the bus bar holder 60 by insert molding. According to this configuration, the bus bar holder 60 covering the bus bar 71 can more effectively slow down the heat transfer from the bus bar 71 to the resin molded portion 50.
(3) The bus bar holder 60 and the bus bar 71 are provided on the axial side of the coil 40. This configuration is advantageous for reducing the size of the stator 11 in the radial direction.
(4) The bus bar holder 60 has the first covering portion 61, the second covering portion 62, and the third covering portion 63. The first covering portion 61 covers a side surface of the bus bar 71 that faces the coil 40 in the axial direction. In the bus bar holder 60, the first covering portion 61 is configured as an interposed portion disposed between the coil 40 and the bus bar 71. The second covering portion 62 covers the side of the bus bar 71 opposite to the first covering portion 61 in the axial direction. The third covering portions 63 cover both radial sides of the bus bar 71. According to this configuration, the bus bar holder 60 including the first covering portion 61, the second covering portion 62 and the third covering portion 63 can more effectively slow down the heat transfer from the bus bar 71 to the resin molded portion 50.
(5) The first covering portion 61 of the bus bar holder 60 and the coil 40 are disposed apart from each other. The resin molded portion 50 has the intermediate portion 53 that is inserted between the coil 40 and the first covering portion 61. According to this configuration, it is possible to dissipate heat from the coil 40 to the intermediate portion 53 of the resin molded portion 50. The intermediate portion 53 is a part of the resin molded portion 50 and has a thermal conductivity greater than that of the bus bar holder 60. Therefore, the resin molded portion 50 including the intermediate portion 53 can efficiently dissipate heat from the coil 40.
(6) The bus bar holder 60 has the spacing maintaining portion 64 that maintains the spacing between the coil 40 and the first covering portion 61. According to this configuration, the spacing between the coil 40 and the first covering portion 61 is maintained by the spacing maintaining portion 64, so that the intermediate portion 53 can be formed in an appropriate manner.
(7) The stator 11 includes the connecting portions 72 that electrically connect the multiple coils 40 to one another. The resin molded portion 50 collectively covers the coil 40, the bus bar holder 60 and the connecting portion 72. The bus bar holder 60 including the first covering portion 61 is located between the connecting portion 72 and the coil 40. According to this configuration, the bus bar holder 60 can prevent the heat of the connecting portion 72 from being transmitted to the area around the coil in the resin molded portion 50.
(8) The stator 11 includes the fastening bands 73 that restrain the bus bar holders 60 and the connecting portions 72 to the coils 40. According to this configuration, it is possible to temporarily fix the bus bar holder 60 and the connecting portion 72 to the coil 40 by the fastening band 73 before the resin molded portion 50 is molded. Therefore, it is possible to prevent the positions of the bus bar holder 60 and the connecting portion 72 from being shifted due to the filling pressure when the resin molded portion 50 is molded.

### (Modified Examples)

The above-described embodiments may be modified as follows. The above-described embodiments and the following modified examples can be implemented in combination with one another as long as there is no technical contradiction.

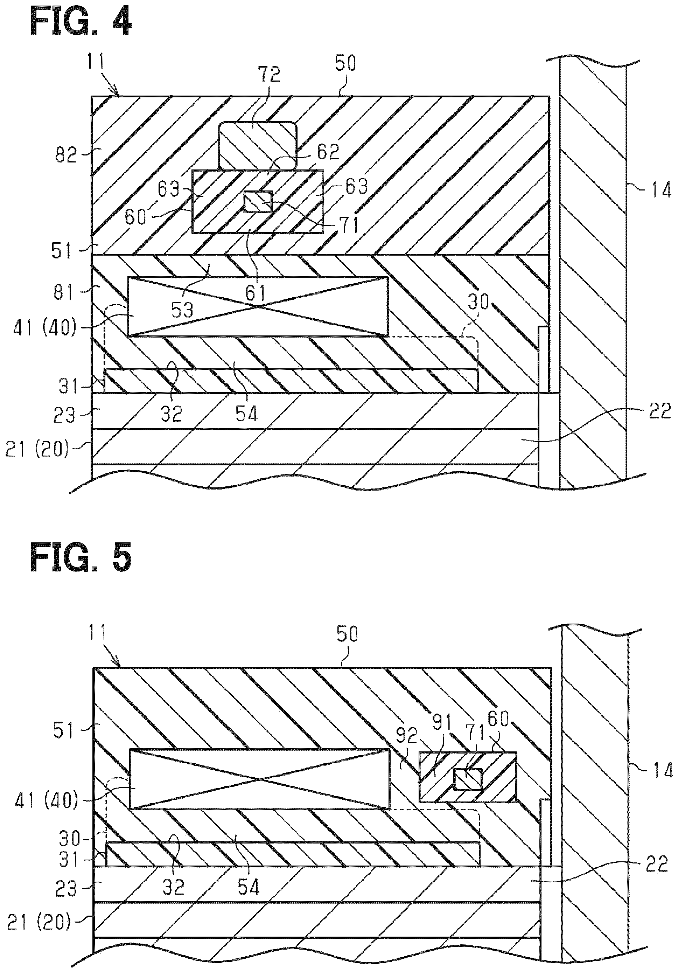

As shown in FIG. 4, the resin molded portion 50 has a first portion 81 that covers the coil 40 and a second portion 82 that covers the bus bar holder 60. The first portion 81 and the second portion 82 are formed from materials having different thermal conductivities. The first portion 81 covers the first coil end 41. The second portion 82 covers the bus bar holder 60 and the connecting portion 72 together. The second portion 82 overlaps with the first portion 81 in the axial direction. The boundary between the first portion 81 and the second portion 82 is set between the first coil end 41 and the bus bar holder 60. That is, the intermediate portion 53 interposed between the first coil end 41 and the bus bar holder 60 is formed by a part of the first portion 81 and a part of the second portion 82. The first portion 81 also includes a filling portion 54 that fits into the groove portion 32.

In the configuration shown in FIG. 4, the thermal conductivity of the second portion 82 is greater than the thermal conductivity of the bus bar holder 60 and is smaller than the thermal conductivity of the first portion 81. According to this configuration, the bus bar holder 60 and the second portion 82 can prevent the heat of the bus bar 71 from being transmitted to the first portion 81 covering the coil 40. This makes it possible to suppress a rise in temperature in the first portion 81 of the resin molded portion 50. Therefore, it is possible to suppress a decrease in the heat transfer performance from the coil 40 to the first portion 81 due to a decrease in the temperature difference between the coil 40 and the first portion 81. Furthermore, since the thermal conductivity of the second portion 82 is greater than the thermal conductivity of the bus bar holder 60, it is possible to ensure heat dissipation from the second portion 82. As a result, it is possible to suppress deterioration of the heat dissipation performance of the resin molded portion 50.

Further, the second portion 82 of the resin molded portion 50 covers the bus bar holder 60 and the connecting portion 72 collectively. According to this configuration, the second portion 82 can prevent the heat of the connecting portion 72 from being transmitted to the first portion 81 that covers the coil 40. In the example of FIG. 4, a fastening band 73 may be provided to restrain the bus bar holder 60 and the connecting portion 72 to the coil 40.

As shown in FIG. 5, the bus bar holder 60 including the bus bar 71 may be arranged to be aligned radially with respect to the first coil end 41. This configuration can contribute to reducing the size of the stator 11 in the axial direction. In the example of FIG. 5, the bus bar holder 60 is disposed radially outward of the first coil end 41. The bus bar holder 60 is configured to include an interposed portion 91 that is interposed radially between the first coil end 41 and the bus bar 71. The resin molded portion 50 that covers the coil 40 and the bus bar holder 60 has an intermediate portion 92 that is inserted between the first coil end 41 and the interposed portion 91. Even with this configuration, the heat from the bus bar 71 can be prevented from being transmitted to the area around the coil in the resin molded portion 50 by the bus bar holder 60 having a lower thermal conductivity.

In the example of FIG. 5, the bus bar holder 60 is disposed radially outward of the first coil end 41, but this configuration is not limiting, and the bus bar holder 60 may be disposed radially inward of the first coil end 41.

In the example of FIG. 5, the connecting portions 72 that electrically connect the coils 40 to each other may be provided inside the resin molded portion 50. In this case, by arranging the connecting portion 72 radially outward of the bus bar holder 60, the bus bar holder 60 is arranged between the connecting portion 72 and the coil 40. According to this configuration, the bus bar holder 60 can prevent the heat of the connecting portion 72 from being transmitted to the area around the coil in the resin molded portion 50.

In the above embodiment, the tip of the spacing maintaining portion 64 abuts against the bobbin 30. However, other than this configuration, for example, the tip of the spacing maintaining portion 64 may abut against, for example, the core back 22 of the stator core 20.

In the above embodiment, the spacing maintaining portion 64 may be omitted from the bus bar holder 60. In this case, for example, a column portion extending in the axial direction is formed on the bobbin 30. The tip of the column portion of the bobbin 30 may be configured to abut against the bus bar holder 60. Even with this configuration, the column portion can maintain the spaced apart state between the coil 40 and the bus bar holder 60, and as a result, the intermediate portion 53 can be preferably formed.

In the above embodiment, the bus bar holder 60 and the connecting portion 72 are restrained to the coil 40 by the fastening band 73. However, this embodiment is not limited to this configuration. For example, the bus bar holder 60 and the connecting portion 72 may be restrained to the stator core 20 or the bobbin 30 by the fastening band 73.

The connecting portion 72 may be provided inside the bus bar holder 60. Moreover, the connecting portion 72 may be provided outside the resin molded portion 50. The present disclosure is not limited to a configuration in which the bus bar 71 is embedded inside the bus bar holder 60. For example, the second covering portion 62 and the third covering portion 63 may be omitted from the bus bar holder 60 in the above embodiment. In this case, the bus bar holder 60 holds the bus bar 71 only by the first covering portion 61. Even with this configuration, the first covering portion 61 can prevent heat from the bus bar 71 from being transmitted to the area around the coil in the resin molded portion 50.

In the above embodiment, the bobbin 30 is molded to the stator core 20. However, the present disclosure is not limited to this configuration. For example, a configuration in which a separately manufactured bobbin is attached to the stator core 20 may be used.

The outer circumferential surface of each of the first molded part 51 and the second molded part 52 may be configured to contact the inner circumferential surface of the housing 14. With this configuration, it is possible to effectively transfer heat from the first molded part 51 and the second molded part 52 to the housing 14. As a result, this configuration can contribute to further improving the heat dissipation properties of the coil 40.

The number of split cores 21 and the number of teeth 23 are not limited to those in the above embodiment and may be changed as appropriate depending on the configuration. The stator core 20 does not need to be formed by the plurality of split cores 21, and may be formed as an integrated part.

The rotor 12 and the stator 11 may be configured to face each other in the axial direction. The rotating electric machine 10 in the above embodiment is an inner rotor type rotating electric machine in which the rotor 12 is arranged on the inner side of the stator 11, but it may also be applied to, for example, an outer rotor type rotating electric machine in which the rotor is arranged on the outer side of the stator.

The embodiments and modified examples disclosed herein are illustrative in all respects, and the present disclosure is not limited to these examples. That is, the scope of the present disclosure is defined by the claims, and is intended to include all modifications within the meaning and scope of the claims.

### (Supplementary note)

Features of the present disclosure are shown below.
[1] A stator including a stator core (20) having a tooth (23), a coil (40) wound around the tooth, a bus bar (71) electrically connected to the coil, a bus bar holder (60) that holds the bus bar, and a resin molded portion (50) that collectively covers the coil, the bus bar holder and the bus bar, wherein the bus bar holder has an interposed portion (61) disposed between the coil and the bus bar, and the thermal conductivity of the bus bar holder including the interposed portion is lower than the thermal conductivity of the resin molded portion.
[2] The stator according to the above-described [1], wherein the bus bar is embedded inside the bus bar holder by insert molding.
[3] The stator according to the above-described [1] or [2], wherein the bus bar holder and the bus bar are provided on axial sides of the coil.
[4] The stator described in the above-described [3], wherein the bus bar holder has a first covering portion (61) as the interposed portion covering the side of the bus bar that faces the coil in an axial direction, a second covering portion (62) covering the side of the bus bar opposite the first covering portion in the axial direction, and a third covering portion (63) covering both radial sides of the bus bar.
[5] The stator described in any one of the above-described [1] to [4], wherein the coil and the interposed portion are arranged at a distance from each other, and the resin molded portion has an intermediate portion (53) that is inserted between the coil and the interposed portion.
[6] The stator according to the above-described [5], wherein the bus bar holder has a spacing maintaining portion (64) that maintains a spaced state between the coil and the interposed portion.
[7] The stator described in any one of the above-described [1] to [6], further comprising a connecting portion (72) that electrically connects the multiple coils to each other, wherein the resin molded portion collectively covers the coil, the bus bar holder and the connecting portion, and the interposed portion of the bus bar holder is located between the connecting portion and the coil.
[8] The stator described in any one of the above-described [1] to [7], further comprising a fastening band (73) that restrains the bus bar holder to the coil or the stator core.
[9] The stator described in any one of the above-described [1] to [8], wherein the resin molded portion has a first portion (81) covering the coil and a second portion (82) covering the bus bar holder, the first portion and the second portion are formed of materials having different thermal conductivities, and the thermal conductivity of the second portion is greater than the thermal conductivity of the bus bar holder and less than the thermal conductivity of the first portion.
[10] The stator described in the above-described [9], further comprising a connecting portion (72) that electrically connects the multiple coils to each other, wherein the second portion of the resin molded portion covers the bus bar holder and the connecting portion collectively.
[11] A rotating electric machine (10) comprising a stator (11) and a rotor (12) facing the stator, wherein the stator includes a stator core (20) having a tooth (23), a coil (40) wound around the tooth, a bus bar (71) electrically connected to the coil, a bus bar holder (60) that holds the bus bar, and a resin molded portion (50) that collectively covers the coil, the bus bar holder and the bus bar, and the bus bar holder has an interposed portion (61) disposed between the coil and the bus bar, and the thermal conductivity of the bus bar holder including the interposed portion is lower than the thermal conductivity of the resin molded portion.

Although the present disclosure has been described in accordance with the examples, it is understood that the present disclosure is not limited to the above examples or structures. The present disclosure encompasses various modifications and variations within the scope of equivalents. Furthermore, various combinations and formations, and other combinations and formations including one or more than one or less than one element may be included in the scope and the spirit of the present disclosure.

## Claims

1. A stator, comprising:
a stator core (20) having a tooth (23);
a coil (40) wound around the tooth;
a bus bar (71) electrically connected to the coil;
a bus bar holder (60) configured to hold the bus bar; and
a resin molded portion (50) configured to collectively cover the coil, the bus bar holder, and the bus bar, wherein
the bus bar holder has an interposed portion (61) disposed between the coil and the bus bar, and
a thermal conductivity of the bus bar holder including the interposed portion is lower than the thermal conductivity of the resin molded portion.

2. The stator according to claim 1, wherein
the bus bar is embedded inside the bus bar holder by insert molding.

3. The stator according to claim 1, wherein
the bus bar holder and the bus bar are provided on axial sides of the coil.

4. The stator according to claim 3, wherein
the bus bar holder includes
a first covering portion (61) as the interposed portion covering a side surface of the bus bar that faces the coil in an axial direction,
a second covering portion (62) covering the bus bar on the opposite side to the first covering portion in the axial direction, and
a third covering portion (63) covering both radial sides of the bus bar.

5. The stator according to claim 1, wherein
the coil and the interposed portion are disposed apart from each other, and
the resin molded portion has an intermediate portion (53) disposed between the coil and the interposed portion.

6. The stator according to claim 5, wherein
the bus bar holder has a spacing maintaining portion (64) that maintains a spaced state between the coil and the interposed portion.

7. The stator according to claim 1, further comprising,
a connecting portion (72) that electrically connects the coils to each other, wherein
the resin molded portion collectively covers the coil, the bus bar holder, and the connecting portion, and
the interposed portion of the bus bar holder is located between the connecting portion and the coil.

8. The stator according to claim 1, further comprising,
a fastening band (73) that restrains the bus bar holder to the coil or the stator core.

9. The stator according to claim 1, wherein
the resin molded portion has a first portion (81) that covers the coil and a second portion (82) that covers the bus bar holder,
the first portion and the second portion are formed of materials having different thermal conductivities, and
the thermal conductivity of the second portion is greater than the thermal conductivity of the bus bar holder and less than the thermal conductivity of the first portion.

10. The stator according to claim 9, further comprising,
a connecting portion (72) that electrically connects the coils to each other, wherein
the second portion of the resin molded portion collectively covers the bus bar holder and the connecting portion.

11. A rotating electric machine (10), comprising:
a stator (11); and
a rotor (12) facing the stator, wherein
the stator includes
a stator core (20) having a tooth (23),
a coil (40) wound around the tooth,
a bus bar (71) electrically connected to the coil,
a bus bar holder (60) configured to hold the bus bar, and
a resin molded portion (50) configured to collectively cover the coil, the bus bar holder, and the bus bar,
the bus bar holder has an interposed portion (61) disposed between the coil and the bus bar, and
a thermal conductivity of the bus bar holder including the interposed portion is lower than the thermal conductivity of the resin molded portion.
